# EUROPÄISCHE PATENTSCHRIFT

(11) **EP 1 158 199 B1**
(45) Veröffentlichungstag und Bekanntmachung des Hinweises auf die Patenterteilung: **11.04.2007**
(21) Anmeldenummer: 01112035.9
(22) Anmeldetag: 23.05.2001
(51) Int. Cl.: F16D 66/02, F16D 65/092

(54) **Belagverschleissanzeigevorrichtung für Scheibenbremsen**
Lining wear indication device for disc brakes
Dispositif d'indication d'usure pour garnitures de freins à disque

(30) Priorität: 24.05.2000 DE 10025659
(43) Veröffentlichungstag der Anmeldung: 28.11.2001
(73) Patentinhaber: Lucas Automotive GmbH, 56070 Koblenz (DE)
(72) Erfinder: Scharrenbach, Thomas, 56743 Mending (DE); Madzgalla, Frank, 56070 Koblenz (DE); Ruedell, Wolfgang, 56321 Brey (DE)
(74) Vertreter: von Hellfeld, Axel

(56) Entgegenhaltungen:
- EP-A- 0 762 008
- DE-A- 4 431 724
- DE-C- 19 823 022
- US-A- 5 404 970

## Beschreibung

Die Erfindung betrifft eine Belagverschleißwarnanzeigevorrichtung und eine Vorrichtung zum Montieren einer Belagverschließwarnanzeigevorrichtung.

Insbesondere zum Einsatz kommen die erfindungsgemäßen Vorrichtungen bei Scheibenbremsen, insbesondere Schwimmsattel-Teilbelag-Scheibenbremsen.

Ein Halteblech zur Aufnahme eines Steckers für eine elektrische Belagverschleißwarnanzeige ist beispielsweise aus dem französischen Gebrauchsmuster FR 2 766 299 A3 bekannt. Eine Halterung des Warnkabels ist dabei nicht vorgesehen.

Aus der deutschen Offenlegungsschrift DE 4 431 724 A1 ist ein Schwimmsattel mit einem angegossenen Vorsprung bekannt, an dem ein Blechhalter festgeklemmt ist, der die Steckverbindung für die elektrische Belagverschleißwarnanzeige trägt.

Aus der deutschen Patentschrift DE 19 823 022 C1 ist eine elektrische Belagverschleißwarnanzeige bekannt, bei welcher der Anschlußstecker durch einen Blechhalter an dem Gehäuse befestigt ist, und das Zuführkabel in einer von dem Blechhalter getrennt angebrachten Kabelschelle geführt ist.

Aus der deutschen Patentschrift DE 69 308 501 T2 ist ein Halteblech für eine Belagverschleißwarneinrichtung bekannt, bei der ein Kabelabschnitt durch eine Zunge des Haltebleches geklammert in Position gehalten wird. Eine Relativbewegung zwischen dem Kabelabschnitt und der Zunge findet nicht statt. Die erforderliche Kabellängung wird durch das Dehnen einer Kabelspirale erreicht.

Weitere Haltebleche sind aus den deutschen Offenlegungsschriften DE 19 533 629 A1 und DE 19 528 466 A1 sowie aus der britischen Patentschrift GB 1 582 567 und der amerikanischen Patentschrift US 5 404 970 bekannt.

Um auf einfache Art und Weise ein Warnsignal bei Verschleiß des Bremsbelages auszulösen, wird allgemein ein Ende eines Warnkabels in die Reibmasse des Bremsbelags eingeklebt oder auf einem reibbelagfreien Bereich der Belagträgerplatte befestigt. Hierbei ist das Kabelende mit Kunststoff umbettet, derart, dass ein Stopfen entsteht, welcher in einer Aussparung der Belagträgerplatte gehalten wird. Bei entsprechendem Verschleiß der Belagmasse gelangt die Bremsscheibe auch in Reibeingriff mit dem Stopfen, scheuert diesen durch und stellt schließlich mit dem Kabelende einen elektrischen Kontakt her, derart, dass Masse an das Kabelende gelegt wird. Bei einer Zweileiterausführung schleift die Bremsscheibe eine Kabelschlaufe durch, wodurch ein Ruhestrom unterbrochen und das Warnsignal ausgelöst wird. Auch ist es üblich, dass bereits das Anschleifen der Kabelschlaufe und das Anlegen von Masse ein erstes Warnsignal auslöst.

Unabhängig welche dieser drei Schaltungen verwendet wird, ist allen gemeinsam, dass der Bremsbelag, während er verschleißt, seine Lage in Bezug zu festen Teilen der Bremse ändert.

Da insbesondere bei Scheibenbremsen mit schwimmendem Sattel der Bremsträger recht wenig Fläche bietet, das Warnkabel zu befestigen, wird häufig das Warnkabel am Schwimmsattel befestigt. Soll nun der innere Bremsbelag mit einer Belagverschleißwarnanzeige versehen werden, so ist zu berücksichtigen dass der innere Bremsbelag gegenüber dem Schwimmsattel sich doppelt so viel verschiebt wie gegenüber dem Bremsträger. Bis zum Verschleißende können bei üblichen Bremsen für Personenkraftwagen Verschiebewege von 25 bis 30 Millimeter eintreten.

Wird der Stecker der Belagverschleißwarnanzeige an dem Schwimmsattel befestigt, so muss eine Schlaufe in dem Warnkabel vorgesehen werden, die diese 25 bis 30 Millimeter Verschiebeweg zulässt. Andererseits soll das Warnkabel aber auch ordentlich geführt werden, damit es nicht an drehenden Teilen, beispielsweise der Radfelge, scheuert oder durch Schwingungen bricht.

Aufgabe der Erfindung ist es, ein Halteblech für das Warnkabel und den Stecker einer Belagverschleißwarnanzeige zu bilden, durch welches der Warnkabel sicher geführt wird.

Die Erfindung stellt eine Beiagverschleißwarnanzeigevorrichtung gemäß Anspruch 1 für eine Scheibenbremse bereit mit einem Halteblech das ein Warnkabel und einen Stecker abstützt. Die Belagverschleißwarnanzeigevorrichtung ist dadurch gekennzeichnet, dass das Halteblech an der Bremse befestigbar ist und eine Abwinkelung aufweist, die passgenau auf einer Stufenfläche der Bremse aufliegt, dass der Stecker formschlüssig in einer Steckerschelle des Halteblechs abgestützt ist und dass das Warnkabel in einer Kabelschelle des Haltebleches mit Spiel abgestützt ist.

Weiterhin stellt die Erfindung eine Vorrichtung gemäß Anspruch 2 zum Montieren einer Belagverschleißwarnanzeigevorrichtung an einer Scheibenbremse bereit, bei der ein Halteblech eine Abwinkelung aufweist, zum passgenauen Auflegen auf eine Stufenfläche der Bremse, und das ferner eine einen Stecker formschlüssig abstützende Steckerschelle und eine ein Warnkabel mit Spiel abstützende Kabelschelle aufweist, so dass das Halteblech und damit die Belagverschleißwarnanzeigevorrichtung insgesamt sicher positioniert ist.

Vorteilhafte Ausgestaltungen der Erfindung sind in den abhängigen Ansprüchen beschrieben.

Nachfolgend wird ein Ausführungsbeispiel der Erfindung anhand der Zeichnung näher erläutert. Es zeigt:
Figur 1 eine Scheibenbremse in perspektivischer Darstellung mit einem Halteblech, einem Warnkabel und einem Stecker einer Belagverschleißwarnanzeigevorrichtung;
Figur 2 einen Bremsbelag mit Teilen der Belagverschleißwarnanzeigevorrichtung in Seitenansicht;
Figur 3 die Scheibenbremse in Rückansicht;
Figur 4 die Scheibenbremse in Seitenansicht;
Figur 5 einen Bremsbelag mit Teilen der Belagverschleißwarnanzeigevorrichtung;
Figur 6 den Bremsbelag mit Teilen der Belagverschleißwarnanzeigevorrichtung in Seitenansicht;

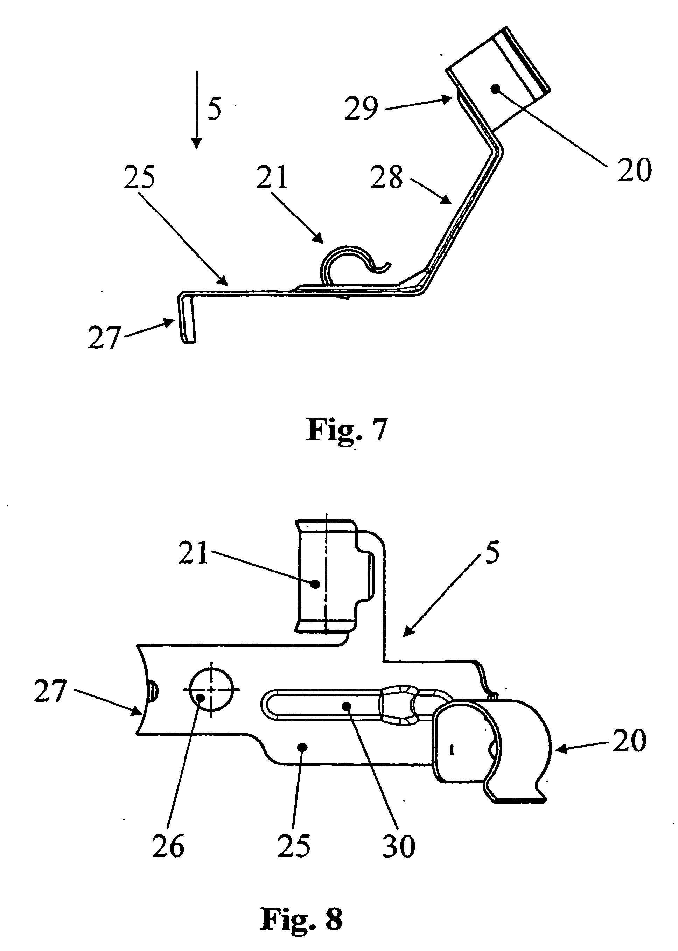

Figur 7 ein Halteblech von der Seite;
Figur 8 das Halteblech in Draufsicht;

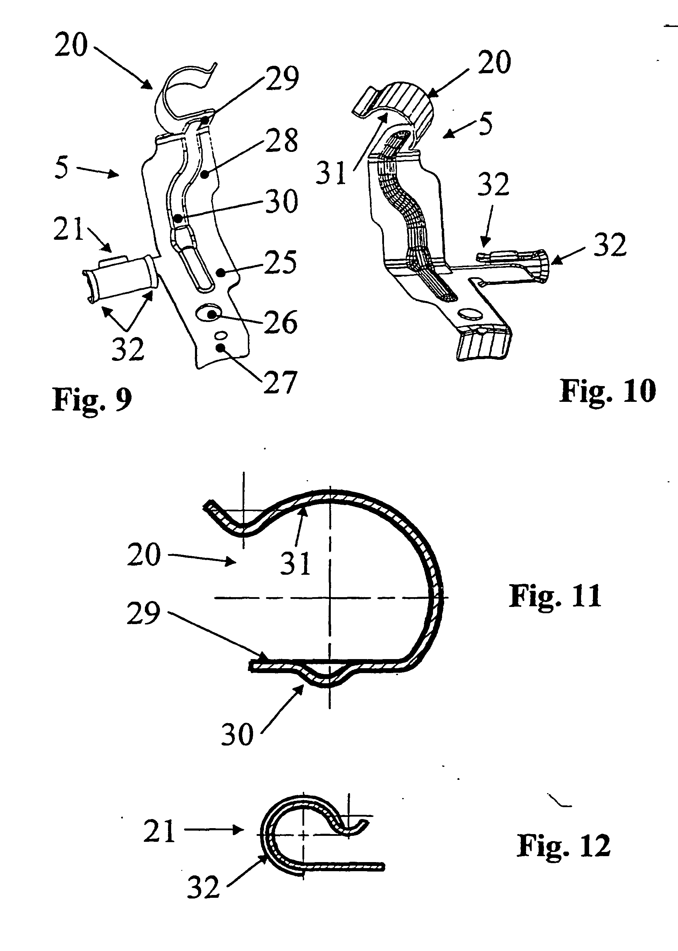

Figur 9 das Halteblech in perspektivischer Darstellung;
Figur 10 das Halteblech in einer weiteren perspektivischen Darstellung;
Figur 11 einen Schnitt durch eine Steckerschelle; und
Figur 12 einen Schnitt durch eine Kabelschelle.

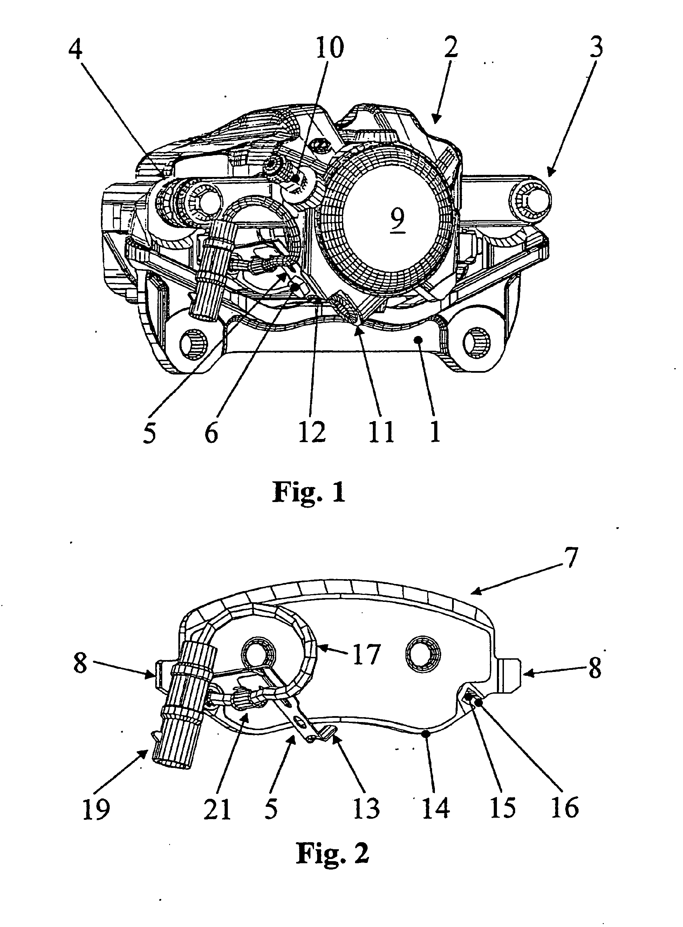

Die in Figur 1 dargestellte Scheibenbremse ist von allgemein bekannter Bauart. Gezeigt ist hier eine Schwimmsattel-Teilbelag-Scheibenbremse.

An einem Bremsträger 1 wird ein Schwimmsattel 2 mittels Bolzenführungen 3, 4 verschiebbar abgestützt.

Ein Halteblech 5 für eine Belagverschleißwarnanzeigevorrichtung (siehe unten) ist mittels einer Schraube 6 an dem Schwimmsattel 2 befestigbar. Ein Bremsbelag 7 gleitet mit seitlichen Ansätzen 8 in Führungsnuten (nicht näher dargestellt) des Bremsträgers 1.

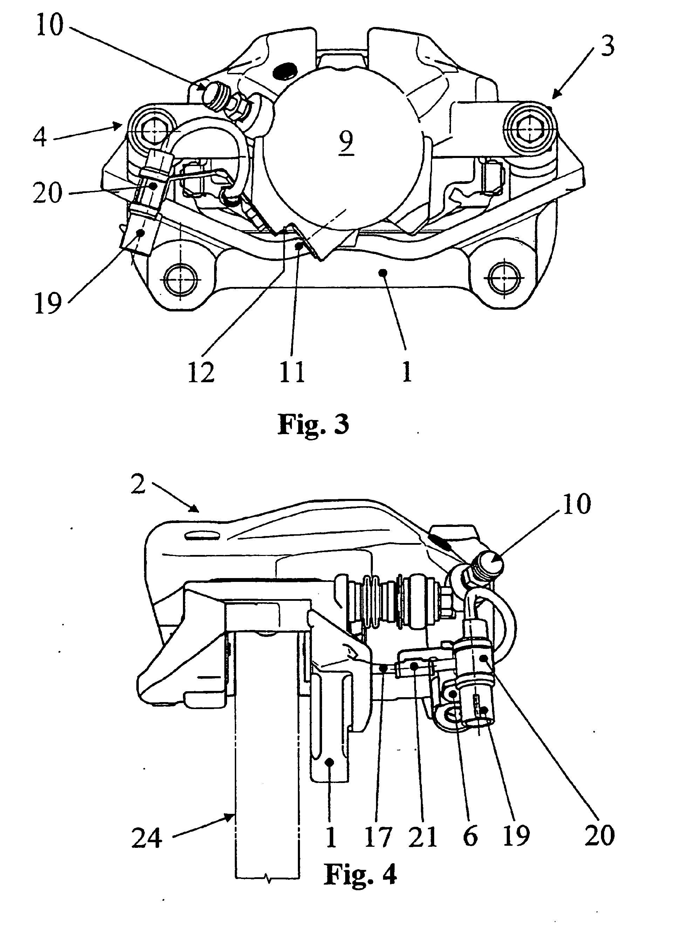

Der Schwimmsattel 2 weist einen Betätigungszylinder 9 auf, der mit einem Anschluß für eine Entlüftungsschraube 10 und einem Anschluß 11 für eine Hydraulikleitung (nicht gezeigt) versehen ist. Der Anschluß 11 für eine Hydraulikleitung liegt, wie insbesondere in Figur 3 zu erkennen ist, in einer Ebene, die versetzt ist in bezug auf die Ebene, in der das Halteblech 5 am Schwimmsattel montiert ist. Die beiden Ebenen bilden eine Stufe (vgl. Figur 3), wobei die Stufenfläche 12 senkrecht zu den beiden vorstehend genannten Ebenen steht. Die Stufenfläche 12 ist beim dargestellten Ausführungsbeispiel nicht plan (eben), sondern gekrümmt, d. h. die Stufenfläche 12 ist nach innen gewölbt, wie in Figur 1 zu erkennen ist. Das Halteblech 5 weist an seinem einen Ende eine Abwinkelung 13 auf (vgl. insbesondere Figur 2), die komplementär zur Wölbung der Stufenfläche 12 ebenfalls gewölbt ist, so daß sich die Abwinkelung 13 genau in die Stufenfläche 12 anschmiegt und auf diese Weise gewährleistet, daß das Halteblech 5 und damit die von diesem abgestützten Teile paßgenau in bezug auf die übrigen Teile der Bremse positioniert sind.

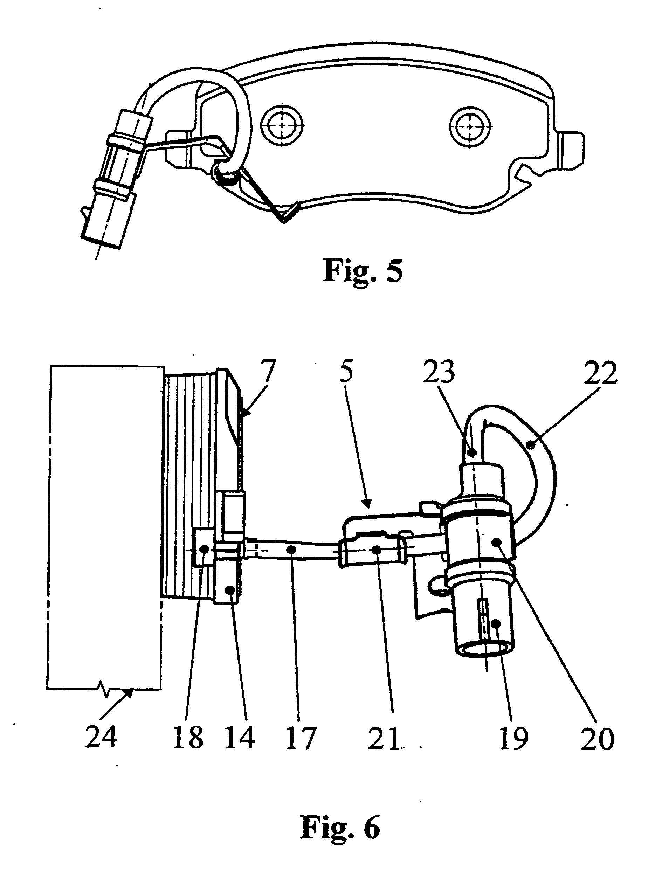

Der Bremsbelag 7 weist eine Belagträgerplatte 14 auf, in die zwei Aussparungen 15 gestanzt sind. Die Aussparungen 15 als solche sind Stand der Technik, sie haben einen schmalen Durchlaß 16, durch den das Warnkabel 17 hindurchgeschoben wird, sodann wird der Stopfen 18, Fig. 6, in den größeren Bereich der Aussparung 15 eingedrückt. Zur zusätzlichen Sicherung kann noch eine Federscheibe auf den Stopfen geschoben werden.

Die Figur 3 zeigt die beengten Platzverhältnisse zur Unterbringung des Haltebleches 5, des Steckers 19 und des Warnkabels 17. Der Figur 4 kann entnommen werden, daß das Warnkabel 17 kaum über die axiale Baulänge der Bremse hinausragt und damit auch kaum an anderen Teilen, beispielsweise Achsteilen, zum Anliegen kommen kann. Bei Verschleiß des inneren Bremsbelages 7 wird das Warnkabel 17 durch die Kabelschelle 21 gezogen, wobei die Verschiebung des Warnkabels 17 durch die Kabelschelle 21 im wesentlichen nur zu einem Schwenken der Schlaufe 22 um die Achse 23 des Steckers 19 führt.

Das Halteblech 5 weist eine erste Fläche 25 auf mit einem Loch 26 zur Aufnahme der Schraube 6. Eine annäherend rechtwinkelige Abkröpfung oder Abwinkelung 27 dient der Zentrierung des Haltebleches 5 an dem Schwimmsattel 2. Die Abkröpfung 27 ist Teil einer Zylinderfläche und dient der Anschmiegung an die Stufenfläche 12. Die Abkröpfung 27 schließt mit der ersten Fläche 25 einen Winkel von 87 Grad ein. Diese geringe Abweichung zu einer 90 Grad Abbiegung dient der Erzeugung einer Vorspannung bei Festschrauben des Haltebleches 5. Die Abkröpfung 27 biegt sich auf und verspannt sich mit der Versatzfläche 12.

Eine zweite Fläche 28 schließt mit der ersten Fläche 25 einen Winkel von etwa 120 Grad ein. Die zweite Fläche 28 ist an ihrem der ersten Fläche 25 abgewandten Ende abgebogen und bildet eine dritte Fläche 29. Eine Sicke 30 durchzieht die erste, zweite und dritte Fläche 25, 28, 29 und versteift das Halteblech.

An die dritte Fläche 29 schließt sich die Steckerschelle 20 an. Nahe des Übergangsbereiches der ersten zur zweiten Fläche 25, 28 ragt aus der Ebene der ersten Fläche 25 seitlich die Kabelschelle 21.

Die Steckerschelle 20 nimmt den Stecker 19 auf. Dabei rastet die Steckerschelle 20 in eine auf die Breite der Steckerschelle 20 abgestimmte Nut in der Außenfläche des Steckers 19 ein. Die seitlichen Begrenzungen 31 der Steckerschelle 20 sind scharfkantig ausgebildet, um zu verhindern, daß der Stecker 19 bei Kräften auf ihn in Richtung seiner Achse 23 sich aus der Stekkerschelle 20 herausziehen beziehungsweise herausdrücken läßt.

Die ebene Fläche 29 wirkt mit einer entsprechenden Fläche des Steckers 19 zusammen und bildet eine Sicherung gegen Verdrehen des Steckers 19.

Die Kabelschelle 21 ist im Gegensatz zur Steckerschelle 20 an ihren seitlichen Enden 32 trichterförmig aufgeweitet. Dies ermöglicht ein gutes axiales Hineingleiten des Warnkabels 17 in die Kabelschelle 21 bei Bewegungen zwischen dem Bremsbelag 7 und dem Schwimmsattel 2. Desweiteren wird eine Beschädigung durch Aufscheuern des Warnkabels 17 vermieden.

Für Sonderfälle, bei denen das Warnkabel 17 durch die Kabelschelle 21 leicht umgelenkt werden muß, kann statt nur trichterförmiger Aufweitung der Enden 32 der Kabelschelle 21 auch der zylinderförmige Bereich der Kabelschelle 21 zur umlenkenden Führung des Warnkabels 21 herangezogen und umgestaltet werden, beispielsweise kann die Kabelschelle 21 im Längsschnitt gesehen aus Teilen von Kreisen gebildet sein.

Die Weite der Kabelschelle 21 ist derart bemessen, daß das Warnkabel 17 leicht mit Spiel in ihr gleiten kann. Durch die Länge der Kabelschelle 21 wird, - im Gegensatz zu beispielsweise nur einem Loch in einem Blech - da wäre nur die Blechstärke die Führungslänge -, auch sichergestellt, daß trotz leichter Verschiebbarkeit des Warnkabels 17 in der Kabelschelle 21, Schwingungen nicht zum Scheuern des Warnkabels 17 an der Kabelschelle 21 führen.

Durch die Erfindung ist es sichergestellt, daß auch bei beengten Platzverhältnissen eine ordentliche Führung des Warnkabels 17 gewährleistet ist.

## Patentansprüche

1. Belagverschleißwarnanzeigevorrichtung für eine Scheibenbremse mit einem an der Bremse befestigbaren Halteblech (5), das ein Warnkabel (17) und einen Stecker (19) abstützt, wobei das Halteblech (5) an der Bremse befestigbar ist und eine Abwinkelung (27) aufweist, die passgenau auf einer Stufenfläche (12) der Bremse aufliegt, und wobei der Stecker (19) formschlüssig in einer Steckerschelle (29) des Halteblechs (5) abgestützt ist, **dadurch gekennzeichnet, dass** das Warnkabel (17) in einer Kabelschelle (21) des Haltebleches (5) mit Spiel abgestützt ist.

2. Vorrichtung zum Montieren einer Belagverschleißwarnanzeigeeinrichtung gemäß Anspruch 1 an einer Scheibenbremse mit einem Halteblech (5), das eine Abwinkelung (27) aufweist zum passgenauen Auflegen auf eine Stufenfläche (12) der Bremse, und das ferner eine einen Stecker (19) formschlüssig abstützende Steckerschelle (20) und eine ein Warnkabel (17) mit Spiel abstützende Kabelschelle (21) aufweist.

3. Vorrichtung nach einem der Ansprüche 1 oder 2, **dadurch gekennzeichnet, dass** die Abwinkelung (27) in einem solchen Winkel zur Stufenfläche (12) der Bremse steht, dass die Abwinkelung (27) unter Biegespannung an der Stufenfläche (12) anliegt.

4. Vorrichtung nach einem der Ansprüche 1 oder 2, **dadurch gekennzeichnet, dass** die Abwinkelung (27) gewölbt ist und die Stufenfläche (12) eine komplementäre Wölbung aufweist.

5. Vorrichtung nach Anspruch 4, **dadurch gekennzeichnet, dass** die gewölbte Fläche der Abwinkelung(27) Teil einer Zylindermantelfläche ist, wobei die Achse des Zylinders (9) ausserhalb des Haltebleches (5) liegt.

6. Vorrichtung nach Anspruch 1, **dadurch gekennzeichnet, dass** das Warnkabel (17) eine Schlaufe (22) aufweist, die um eine Achse (23) gedreht ist.

7. Vorrichtung nach Anspruch 6, **dadurch gekennzeichnet, dass** die Achse (23) die Achse der Steckerschelle (20) ist.

8. Baueinheit, aufweisend eine Vorrichtung gemäss Anspruch 2, ein Warnkabel (17), einen Stopfen (18) und einen Stecker (19).

9. Baugruppe, aufweisend einen Bremsbelag (7) und eine Baueinheit gemäß Anspruch 8..

## Claims

1. A lining wear indicating device for a disk brake with a support bracket (5) which can be mounted at the brake and which supports a signalling cable (17) and a connector (19), with the support bracket (5) being attachable at the brake and comprising a bend (27) which rests with an accurate fit on a stepped surface (12) of the brake, and with the connector (19) being supported in a positive fit in a connector clamp (20) of the support bracket, **characterised.in that** the signalling cable (17) is supported with clearance in a cable clamp (21) of the support bracket (5).

2. A device for installing a lining wear indicating device according to Claim 1 at a disk brake with a support bracket (5) which comprises a bend (27) for an accurate fit on a stepped surface (12) of the brake, and which further comprises a connector clamp (20) for positively supporting the connector (19) and a cable clamp (21) for supporting a signalling cable (17) with clearance.

3. The device according to one of Claims 1 or 2, **characterised in that** the bend (27) is located under such an angle relative to the stepped surface (12) of the brake that the bend (27) rests against the stepped surface (12) while being subjected to a bending stress.

4. The device according to one of Claims 1 or 2, **characterised in that** the bend (27) is convex and the stepped surface (12) comprises a complementary convexity.

5. The device according to Claim 4, **characterised in that** the convex surface of the bend (27) is part of a cylinder jacket, with the axis of the cylinder (9) being located outside the support bracket (5).

6. The device according to Claim 1, **characterised in that** the signalling cable (17) comprises a loop (22) which extends around an axis (23).

7. The device according to Claim 6, **characterised in that** the axes (23) is the axes of the connector clamp (20).

8. A constructional unit, comprising a device according to Claim 2, a signalling cable (17), a plug (18), and a connector (19).

9. An assembly, comprising a brake lining (7) and a constructional unit according to Claim 8.

## Revendications

1. Dispositif d'indication et d'avertissement d'usure de garniture pour un frein à disques comprenant une tôle de retenue (5) pouvant être fixée sur le frein, qui supporte un câble d'avertissement (17) et une fiche (19), la tôle de retenue (5) pouvant être fixée sur le frein et présentant un coude (27) qui repose de façon très ajustée sur une surface étagée (12) du frein, et la fiche (19) étant soutenue par complémentarité de formes dans une bride à fiche (29) de la tôle de retenue (5), **caractérisé en ce que** le câble d'avertissement (17) est soutenu avec du jeu dans un serre-câble (21) de la tôle de retenue (5).

2. Dispositif pour le montage d'un dispositif d'indication et d'avertissement d'usure de garniture selon la revendication 1 sur un frein à disques comprenant une tôle de retenue (5) qui présente un coude (27) pour la pose très ajustée sur une surface étagée (12) du frein, et qui présente également un serre-fiche (20) soutenant une fiche (19) par complémentarité de formes et un serre-câble (21) soutenant avec du jeu un câble d'avertissement (17).

3. Dispositif selon l'une quelconque des revendications 1 ou 2, **caractérisé en ce que** la partie coudée (27) est disposée dans un angle par rapport à la surface étagée (12) du frein tel que le coude (27) s'appuie avec tension de flexion sur la surface étagée (12).

4. Dispositif selon l'une quelconque des revendications 1 ou 2, **caractérisé en ce que** le coude (27) est incurvé et la surface étagée (12) présente une courbure complémentaire.

5. Dispositif selon la revendication 4, **caractérisé en ce que** la surface incurvée du coude (27) fait partie d'une surface d'enveloppe cylindrique, l'axe du cylindre (9) étant disposé à l'extérieur de la tôle de retenue (5).

6. Dispositif selon la revendication 1, **caractérisé en ce que** le câble d'avertissement (17) présente une boucle (22) qui est tournée autour d'un axe (23).

7. Dispositif selon la revendication 6, **caractérisé en ce que** l'axe (23) est l'axe du serre-fiche (20).

8. Module comportant un dispositif selon la revendication 2, un câble d'avertissement (17), un bouchon (18) et une fiche (19).

9. Ensemble comportant une garniture de frein (7) et un module selon la revendication 8.
